# EUROPEAN PATENT SPECIFICATION

(11) **EP 4 048 536 B1**
(45) Date of publication and mention of the grant of the patent: **02.08.2023**
(21) Application number: 20790349.3
(22) Date of filing: 21.10.2020
(51) Int. Cl.: B60G 7/00, B60G 9/00, B60G 11/04, B60G 11/113, B60G 11/46, B60B 35/00, B60B 35/08, F16F 1/26

(54) **AXLE CLAMPING ARRANGEMENT WITH EXTENSION MECHANISM FOR TENSIONING LINK**
ACHSSPANNANORDNUNG MIT ERWEITERUNGSMECHANISMUS FÜR EINE SPANNVERBINDUNG
AGENCEMENT DE SERRAGE D'ESSIEU AVEC MÉCANISME D'EXTENSION POUR LIAISON DE TENSION

(30) Priority: 22.10.2019 NL 2024078
(43) Date of publication of application: 31.08.2022
(73) Proprietor: VDL Weweler B.V., 7325 WC Apeldoorn (NL)
(72) Inventor: AALDERINK, Derk, Geert, 7245 NV LAREN (NL); BRUINJA, Marten, Frank, Ciarán, 7545 VV ENSCHEDE (NL); SCHRIER, Tom, 7323 RL APELDOORN (NL)
(74) Representative: EP&C
(86) International application number: PCT/EP2020/079611
(87) International publication number: WO 2021/078793

(56) References cited:
- EP-A1- 1 439 081
- EP-A1- 3 461 653
- WO-A1-2009/014423
- DE-A1- 2 904 188
- DE-A1-102014 005 023
- JP-A- S6 267 339

## Description

The invention relates to the field of air sprung wheel axle suspensions for suspending an axle body of a wheel axle from a vehicle. Such air sprung wheel axle suspensions are in particular used on heavy road vehicles such as trucks, trailers and semi-trailers.

In particular, the invention relates to the field in which a wheel axle suspension, on each side of the vehicle, has a suspension arm which extends substantially in the longitudinal direction of the vehicle, called a "trailing arm" in the art, and to which the axle body is attached, each trailing arm being hingedly connected at the front, viewed in the direction of travel of the vehicle, to a bearing bracket which is arranged on the vehicle chassis. An air spring is arranged between the trailing arm and the chassis of such a wheel axle suspension.

In particular, the invention relates to the field in which a wheel axle suspension suspends an axle body from the vehicle chassis by a trailing arm and an air spring on either lateral side. The trailing arms for an air sprung wheel axle suspension are pivotably connected to the chassis at a front end and are rigidly attached to the axle body. At a rear end the trailing arms are supported by the air spring that is arranged between the chassis and the trailing arm. The assembly of trailing arms and the axle body can be considered generally as an integrated roll stabilizer, which mainly has the goal to reduce vehicle body roll when cornering and reduce the weight transfer to the outside wheels of the vehicle.

Because the axle body is rigidly attached to the trailing arms, the roll movements of the vehicle induce torsion in the axle body. However, these torsional loads should not become too high. Therefore the trailing arm/axle body assembly needs some compliancy in the construction to cope with the loads induced by roll-movement. If this compliancy would not be present in the construction, the axle body would be loaded inter alia with too high torsional loads which would reduce the lifetime of an axle considerably.

In general there are two types of trailing arms used in air sprung suspensions: rigid trailing arms and flexible trailing arms.

When using a rigid trailing arm, the compliancy is often provided by applying a relatively big rubber bushing in the front eyelet of the trailing arm.

With flexible trailing arms, which in the art are also referred to as "spring trailing arms" or "spring arms" the compliancy is provided by the trailing arms themselves. Thereto a flexible trailing arm has a "spring portion" between the front eyelet and the region where the axle body is attached. This spring portion is essentially formed as a leaf spring and allows elastic bending of the arm so as to cope with roll movements of the vehicle, but also with for example torsional loads on the axle body due to braking of the wheels. It is commonly known in the field of air sprung wheel axle suspensions that for "spring portions" of trailing arms a parabolic tapering shape is the desired shape, wherein the trailing arm is the thickest at the region where the axle body is attached to the trailing arm, and it tapers "parabolically" towards the front end. The taper is generally brought in the arm by a rolling process, but also forging is an option. The flexible trailing arm is commonly made of spring steel, although also leaf springs of composite materials are known from the art.

Trailing arms of both the rigid and flexible type are generally known to be made in one piece or in two pieces.

A one-piece trailing arm wherein the axle seat is provided by an axle pad arranged between the trailing arm and the axle body is for example disclosed in EP 1 439 081 A1. The axle clamping arrangement in this known wheel axle suspension furthermore comprises a clamping part, in the field also known as "strap plate", arranged on the side of the trailing arm opposite the axle pad and U-shaped bolts which extend around the axle body with their curved portion and extend with their legs along the respective lateral side of the trailing arm and through bores in the clamping part to be tightened with corresponding nuts to clamp the axle body, the axle pad and the trailing arm together.

There are also one-piece trailing arms which have a curved axle seating portion, wherein the axle body is clamped directly against the axle seating portion of the trailing arm without an intermediate part as a an axle pad. An example of such a trailing arm is shown in Fig. 3 of WO 2009/014423 A1. Another example of such a trailing arm is shown in EP 3 461 653 A1.

Two-piece trailing arms trailing arms are assembled in general from a front arm part and a rear arm part and each of said parts comprises a an axle seating portion, wherein the axle is clamped between the two axle seating portions. Such a two part trailing arm is for example disclosed in WO 2009/014423 A1, in which Figs. 7 and 8 show a two-part trailing arm. The known trailing arm assembly comprises a front arm part of the flexible type and a rear arm part which are interconnected by U-bolts or bolts and nuts at the front end and the rear end of the axle seating portions to complete the axle clamping arrangement. Another two-piece trailing arm is disclosed in DE 10 2014 005 023 A1. The axle seating portions in this trailing arm have hook means to hook the axle seating portions together at one end and other connnection means, in particular a bolt connection, a rivet connection or a welded connection, at another end of the axle seating portions.

The present invention relates in particular to an axle clamping arrangement adapted to secure an axle body to a trailing arm in an air sprung wheel axle suspension for a vehicle. The axle clamping arrangement is an important feature of the wheel axle suspensions of the types as outlined in the foregoing. It must provide a rigid connection between the axle body and the trailing arms, such that the assembly of the associated trailing arms and axle body function properly as a unit and fulfil inter alia the earlier mentioned roll stabilizing function for the vehicle without the risk of loosening the connection.

According to the invention the axle clamping arrangement adapted to secure an axle body to a trailing arm in an air sprung wheel axle suspension for a vehicle comprises:
- a first clamping member;
- a second clamping member;
- a tensioning link associated with the first clamping member and the second clamping member, the tensioning link comprising at least one tensioning rod.

In the known air sprung wheel axle suspensions of WO 2009/014423 A1, EP 3 461 653 A1 and EP 1 439 081 A1 a required clamping force is introduced in the axle clamping arrangement by tensioning the (U-)bolt and nut assemblies at the axle seating portions of the trailing arm. It is imminent that this clamping force is well defined to be able to guarantee that the axle body is rigidly attached to the trailing arms. Tightening of nuts is often force-driven, with the coefficient of friction between the threaded parts largely determining the tightening torque. The coefficient of friction is dependent on many factors, difficult to control and therefore assembly of the clamping arrangement, comprising tensioning links having threaded tensioning rods such as the (U-)bolts, is specialized work requiring precision and special tools.

It is an object of the present invention to provide a clamping arrangement adapted to secure an axle body to a trailing arm in an air sprung wheel axle suspension, in which the clamping of the clamping members around the axle body becomes simpler while the required clamping force is warranted.

This object is achieved by an axle clamping arrangement adapted to secure an axle body to a trailing arm in an air sprung wheel axle suspension for a vehicle, the axle clamping arrangement comprising:
- a first clamping member;
- a second clamping member;
- a tensioning link associated with the first clamping member and the second clamping member, the tensioning link comprising at least one tensioning rod;
- an extension mechanism which is adapted to increase the distance between the first clamping member and the second clamping member at the location of the tensioning link to cause a predetermined extension of the tensioning rod such that the tensioning rod is stressed beyond the yield point, thereby providing the tensioning rod with a pretension for providing the clamping force for the axle clamping arrangement to secure the axle body to the trailing arm.

The axle clamping arrangement according to the invention provides the advantage that the tensioning of the first clamping member and second clamping member towards each other is provided by a mechanism which causes - upon activation thereof - a predetermined increase of the distance between the first and second clamping member at the location of the tensioning link. Thereby a predetermined extension or elongation is provided in the tensioning rod(s) of the tensioning link. Because the tensioning rod of the tensioning link is stressed beyond the yield point, thus is subjected to plastic deformation, the pretension in the tensioning rod is insensitive or moderately sensitive for tolerances in the axle clamping arrangement and the axle body. Thus it can be guaranteed that the first and second clamping member will always be clamped towards each other at the location of the tensioning link with a force within a predetermined range. The tensioning link principle according to the invention is based on a place-controlled solution that is not dependent on friction. In this sense, this does not require specialist work, as is by contrast necessary with force driven bolt and nut assemblies. Thus according to the invention the manufacturer designs the parts such that the required clamping force will be introduced automatically in the axle clamping arrangement of the wheel axle suspension upon mounting the trailing arm to the axle body.

In a possible embodiment of the clamping arrangement according to the invention the extension mechanism includes:
- that the tensioning link has a first engagement limb connected to the tensioning rod and engaging the first clamping member at a first engagement surface,
- a fulcrum, wherein the first clamping member is pivotable about said fulcrum from a pre-mounting state to a mounting state, wherein the pivoting movement to the mounting state results in an increase of the distance between the first engagement surface and the second clamping member at the location of the tensioning link causing said predetermined extension of the tensioning rod.

Depending on the specific embodiment of the wheel axle suspension the fulcrum may be located at different locations in the axle clamping arrangement.

For example in a two-part trailing arm, the fulcrum may be located at a front or rear end of the axe seating portions, wherein opposing support surfaces of the respective axle seating portions together define a fulcrum such that the axle seating portions can be pivoted to a closed state in which they clamp the axle body between them.

In another example the strap plate may be pivotable with respect to the upper or lower side of the trailing arm around a fulcrum defined by opposing support surfaces of the trailing arm and the strap plate.

These embodiments are mentioned as examples. Other embodiments are conceivable, wherein in general a fulcrum is present and the pivoting movement around the fulcrum to a mounted state induces a predetermined strain in the tensioning rod of the link which provides a predetermined clamping force to clamp the support surfaces together.

In a possible embodiment the tensioning link has a second engagement limb connected to the tensioning rod and engaging the second clamping member at a second engagement surface.

In a further embodiment the link is a ring-like link comprising two tensioning rods and the first and second engagement limbs interconnect the two tensioning rods.

In a further embodiment the first and second engagement surfaces are defined by respective first and second hook portions formed on the respective first and second clamping members, wherein the respective first and second engagement limbs are adapted to be hooked behind the respective first and second hook portions.

In another possible embodiment of the clamping arrangement according to the invention the extension mechanism includes a wedge structure located in the clamping arrangement somewhere between the first clamping member and the second clamping member such that, when the wedge structure is activated, the distance between the first clamping member and the second clamping member is increased at the location of the tensioning link causing said predetermined extension of the tensioning rod. In this embodiment a wedge is pushed in a dedicated location in the clamping arrangement somewhere between the first and second clamping parts, whereby the distance between said clamping parts is increased and the tension rod(s) of the tensioning link is/are elongated and tensioned. Thus the extension can be accurately predetermined.

Preferably the extension mechanism of the axle clamping arrangement comprises a stop, which defines a predetermined end position of the extension mechanism. In an embodiment with a wedge structure the stop may for example be an abutment surface which is abutted by a wedge body in the end position. In another embodiment the stop may be for example be formed by the axle body, which is abutted by a clamping member and stops the pivoting movement between the first and second clamping member.

The invention also relates to an air sprung wheel axle suspension for a vehicle such as a truck, trailer or semi-trailer, said suspension including an axle body extending substantially in the transverse direction of the vehicle, and furthermore including on each side of the vehicle a bearing bracket associated with a vehicle chassis, an air spring secured to the vehicle chassis, and a trailing arm extending substantially in the longitudinal direction of the vehicle, pivotally connected with its front end portion to the bearing bracket and mounted with an air spring mounting portion thereof to the air spring, wherein the trailing arm is secured to the axle body by an axle clamping arrangement according to the invention as described in the foregoing.

In a possible embodiment of the air sprung wheel axle suspension, the extension mechanism includes that the tensioning link has a first engagement limb connected to the tensioning rod and engaging the first clamping member at a first engagement surface, and further includes a fulcrum, wherein the first clamping member is pivotable about said fulcrum from a pre-mounting state to a mounting state, wherein the pivoting movement to the mounting state results in an increase of the distance between the first engagement surface and the second clamping member at the location of the tensioning link causing said predetermined extension of the tensioning rod, wherein the trailing arm is a two-piece trailing arm comprising a front arm part including the front end portion and a rear arm part including the air spring mounting portion, wherein the first clamping member is constituted by an axle seating portion formed on the front trailing arm and the second clamping member is constituted by an axle seating portion formed on the rear trailing arm portion, the axle seating portions being positioned opposite each other and the axle body being clamped between the two axle seating portions by at least the tensioning link, and wherein the fulcrum is defined by two opposite support surfaces formed on the respective axle seating portions. In this embodiment of the suspension the fulcrum and the link are adapted to allow a pivoting movement of the front arm part and the rear arm part relative to each other when mounting the trailing arm assembly onto the axle body.

In a further embodiment of the air sprung wheel axle suspension, seen in the longitudinal direction of the trailing arm, one end of the axle seating portions is tightened together by the tensioning link and the other end of the axle seating portions is tightened together by a threaded fastener, such as a bolt or a U-bolt.

In another embodiment of the air sprung wheel axle suspension, seen in the longitudinal direction of the trailing arm, both ends of the axle seating portions are tightened together by tensioning links.

In a possible embodiment of the air sprung wheel axle suspension of the invention the trailing arm includes or is provided with an axle seating portion which engages with one side the axle body, and wherein the first clamping member is constituted by a strap plate which is positioned on a side of the trailing arm facing away from the axle body, and wherein the second clamping member is positioned on an opposite side of the axle body.

In a possible embodiment the trailing arm is a two-piece trailing arm comprising a front arm part including the front end portion, and a rear arm part including the air spring mounting portion, wherein the second clamping member is constituted by an axle seating portion formed on the rear trailing arm portion, the axle seating portions being positioned opposite each other and the axle body being clamped between the two axle seating portions, and wherein the tensioning link extends between the strap plate and the axle seating portion of the rear arm part, and wherein the fulcrum is defined between the strap plate and the side of the axle seating portion of the front arm part facing away from the axle body.

In a possible further embodiment, seen in the longitudinal direction of the trailing arm, one end of the axle seating portions is tightened together by the tensioning link and the other end of the axle seating portions is tightened together by a threaded fastener, such as a bolt or a U-bolt.

In another embodiment of the air sprung wheel axle suspension, the second clamping member is a clamping shell, wherein the tensioning link extends between the strap plate and the clamping shell, and wherein the fulcrum is defined between the strap plate and the side of the axle seating portion of the trailing arm facing away from the axle body.

In a further embodiment, seen in the longitudinal direction of the trailing arm, one end of the axle seating portion and the clamping shell is tightened together by the tensioning link and the other end of the axle seating portion and the clamping shell is tightened together by a threaded fastener, such as a bolt or a U-bolt.

In a further embodiment of the air sprung wheel axle suspension having a clamping arrangement including a wedge structure as described in the foregoing, the wedge structure is formed between the strap plate and the trailing arm and comprises at least one recess in the strap plate and at least one wedge adapted to engage a wedge engagement surface of the trailing arm and to be inserted in said recess so as to force the strap plate away from the trailing arm.

The invention will be further elucidated in the following description with reference to the drawing, in which:
Fig. 1 shows a side view of an embodiment of an air sprung wheel axle suspension according to the invention,
Fig. 2 shows a view in perspective of a two-piece trailing arm of the wheel axle suspension of Fig. 1 clamped on an axle body,
Fig. 3 shows a view in perspective of the axle body clamped between the axle seating portions of the two-piece trailing arm of Fig. 2,
Fig. 4 illustrates a pivoting movement between a front arm portion and a rear arm portion of the two-piece trailing arm of Fig. 2,
Fig. 5 shows the separate front arm part and rear arm part of the two-piece trailing arm of Fig. 2,
Fig. 6 shows a side view of an embodiment of a one-piece trailing arm clamped on a an axle body by an embodiment of an axle clamping arrangement according to the invention,
Fig. 7 shows a view in perspective of another two-piece trailing arm mounted on an axle body by an embodiment of an axle clamping arrangement according to the invention,
Fig. 8 illustrates in a side elevational view how the trailing arm of Fig. 7 is clamped on the axle during mounting,
Fig. 9 shows in a side elevational view the trailing arm of Fig.7 in a mounted state on the axle body,
Fig. 10 shows a view in perspective of another one-piece trailing arm mounted on an axle body by another embodiment of an axle clamping arrangement according to the invention,
Fig. 11 illustrates in a side elevational view how the trailing arm of Fig. 10 is clamped on the axle during mounting,
Fig. 12 shows in a side elevational view the trailing arm of Fig. 10 in a mounted state on the axle body,
Fig. 13 shows a view in perspective of an embodiment of a tensioning link for an axle clamping arrangement according to the invention,
Fig. 14 shows a view in perspective of another embodiment of a tensioning link for an axle clamping arrangement according to the invention,
Fig. 15 shows a view in perspective of yet another embodiment of a tensioning link for an axle clamping arrangement according to the invention,
Fig. 16 shows a view in perspective of still another embodiment of a tensioning link for an axle clamping arrangement according to the invention, and
Fig. 17 shows a view in perspective of another embodiment of a tensioning link for an axle clamping arrangement according to the invention.

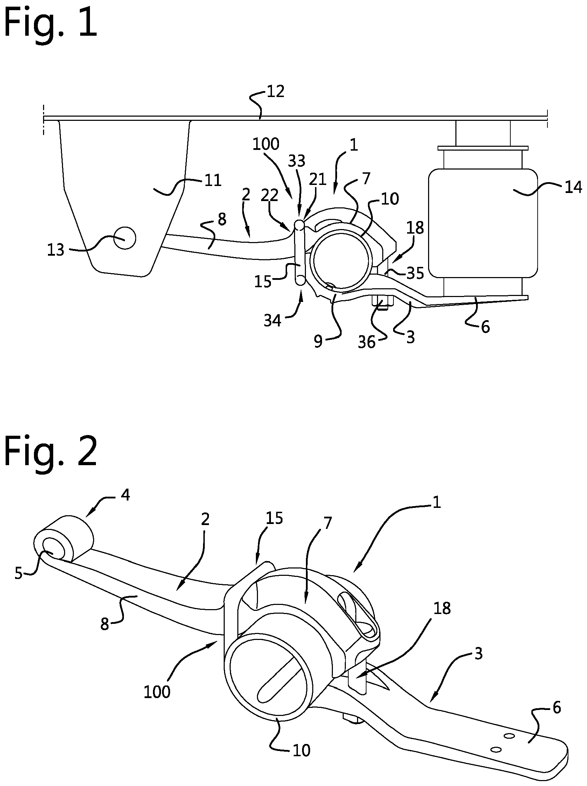

Wheel axles of heavy road vehicles such as trucks, trailers and semi-trailers are suspended from a vehicle chassis by air-sprung wheel axle suspension. The wheel axle of the vehicle includes an axle body 10 extending substantially in the transverse direction of the vehicle. The so called "air suspension" includes on each side of the vehicle a bearing bracket 11 associated with a vehicle chassis 12, an air spring 14 secured to the vehicle chassis 12, and a trailing arm 1 as is for example shown in Fig. 1. The trailing arm 1 extends substantially in the longitudinal direction of the vehicle.

Fig. 2 shows the trailing arm 1 which is mounted to the axle body 10, of which in the figure only a longitudinal section is shown. The trailing arm 1 in this particular embodiment is a two-piece trailing arm comprising a front arm part 2 and a rear arm part 3.

The front arm part 2 of the trailing arm 1 has a front end portion 4 adapted to be pivotally connected to the bearing bracket 11 provided on the chassis 12 as can be seen in Fig. 1. In particular, in the shown embodiment of Figs. 1 and 2, the front end portion 4 comprises an eyelet 5, through which in a mounted state a pivot bolt 13 can pass to mount the front end portion 4 pivotally to the bearing bracket 11 in a manner known per se in the art.

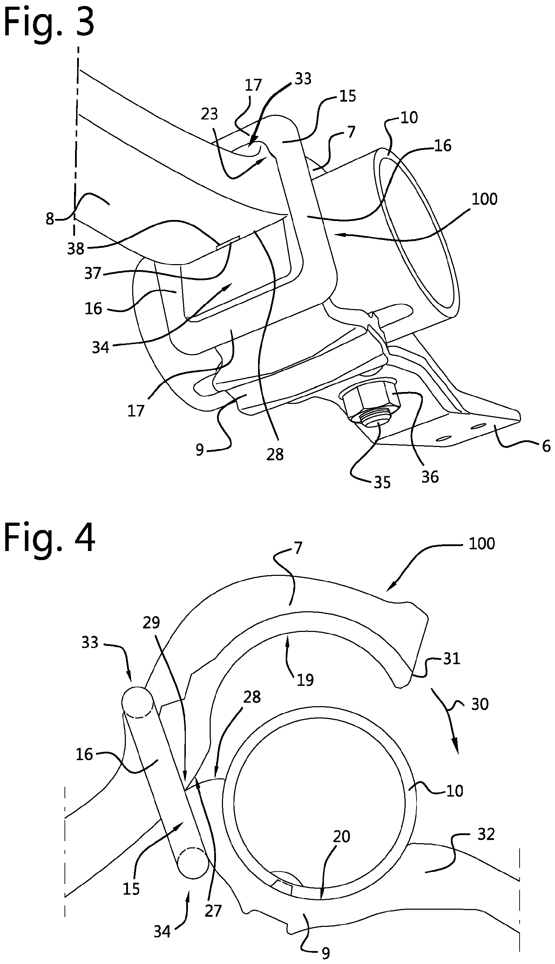

The front arm part 2 has an axle seating portion 7 at a distance rearward from the front end portion 4. The axle seating portion 7 is configured to receive a longitudinal section of the axle body 10. In this specific embodiment the axle body 10 has a circular cross section and consequently the axle seating portion 7 of the front arm part 2 has a concave axle engagement surface 19 (cf. Fig. 4) which conforms to the outer contour of the axe body 10.

Between the front end portion 4 and the axle seating portion 7 the front arm part 2 comprises a spring portion or spring arm 8. This spring portion 8 is in the shown embodiment essentially formed as a leaf spring with a parabolic thickness taper. The front arm part 2 in the shown embodiment is thus of the flexible type. It should be noted here that within the present invention it is also conceivable to make the front arm part 2 of the rigid type.

The rear arm part 3 has an air spring mounting portion 6 adapted to mount thereon the air spring 14, which is secured to the chassis 12, as is shown in Fig. 1.

The rear arm part 6 has on a front end thereof an axle seating portion 9. The axle seating portion 9 is configured to receive a longitudinal section of the axle body 10. In this specific embodiment the axle body 10 has a circular cross section and consequently the axle seating portion 9 of the rear arm part 3 has a concave axle engagement surface 20 (cf. Fig. 4) which conforms to the outer surface of the axe body 10.

The front arm part 2 in this embodiment may be made of spring steel by rolling or forging. The rear arm part 3 may for example be forged of steel or cast in iron.

When the trailing arm 1 is assembled and arranged around the axle body 10, the axle seating portions 7 and 9 are positioned opposed to each other to receive a longitudinal section of the axle body 10 between them. The trailing arm 1 includes a tensioning link 15 and a threaded fastener 18 to connect the axle seating portions 7 and 9 of the front arm part 2 and the rear arm part 3 with each other and clamp them onto the axle body 10. In this embodiment of Figs. 1-5 the axle seating portion 7 of the front arm part 2 and the axle seating portion 9 of the rear arm part thus from a first clamping part and second clamping part, respectively, of the clamping arrangement 100 of this specific embodiment of an air sprung wheel axle suspension according to the invention.

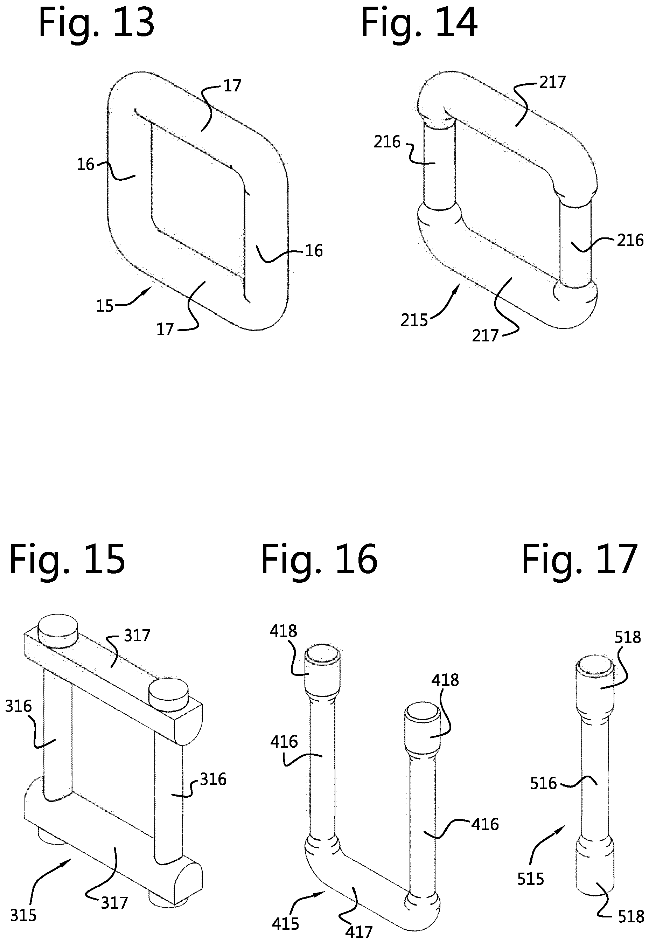

First ends 33 and 34 of the opposed axle seating portions 7 and 9, respectively, are connected by the tensioning link 15. In the shown embodiment the first end is the front end. The tensioning link 15 is a one-piece metal ring-like link 15, comparable to a chain link, comprising two tensioning rods 16 and two transverse limbs 17 that interconnect the tensioning rods 16, cf. Figs. 3 and 13.

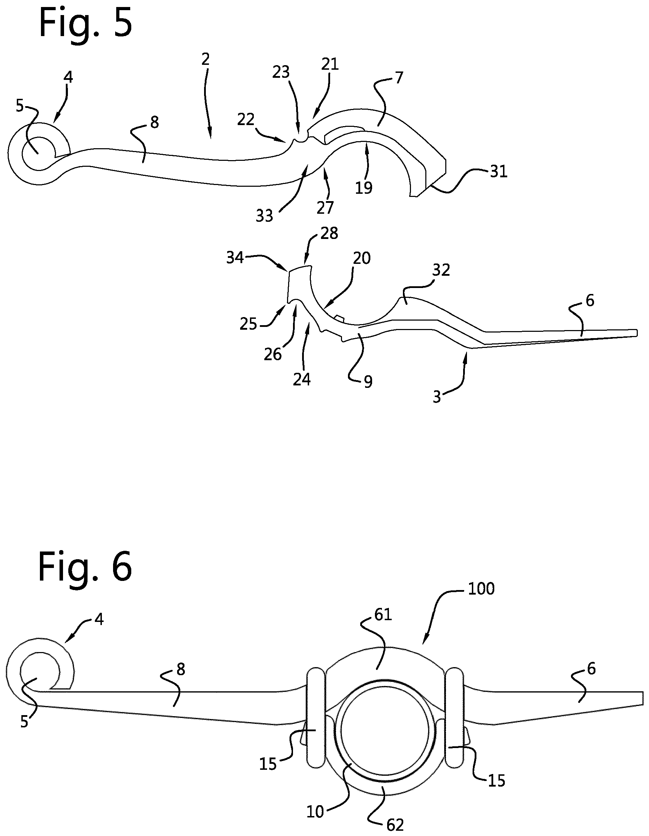

At its first end, at the side 21 opposed to the engagement surface 19, the axle seating portion 7 of the front arm part 2 has a hook portion 22 comprising a groove 23 that extends in transverse direction over the side 21, in this case the upper side, of the front end of the axle seating portion 7, cf. Fig 5. At its first end, at the side 24 opposed to the engagement surface 20, the axle seating portion 9 of the rear arm part 3 has a hook portion 25, comprising a groove 26 extending in transverse direction over the side 24, in this case the lower side, of the front end of the axle seating portion 9.

The axle seating portion 7 has at the first end 33 thereof, in this embodiment corresponding to the front end thereof, a support surface 27. The axle seating portion 9 has at the first end 34 thereof, in this embodiment corresponding to the front end thereof, a support surface 28 as can be seen in Fig. 5. In the assembled state of the trailing arm assembly the support surfaces 27, and 28 are in engagement with each other as can be seen in Figs. 1 and 3.

The respective limbs 17 are adapted to be hooked behind the respective hook portions 22 and 25. The grooves 23 and 26 form the engagement surfaces for the respective limbs 17. When the limbs 17 of the link 15 are arranged in the grooves 23 and 26 of the respective hook portions 22 and 25, the tensioning rods 16 of the link 15 have such a dimension that the support surfaces 27 and 28 are held in engagement with each other.

The support surfaces 27 and 28 together define a fulcrum 29 as can be seen in Fig. 4. The fulcrum 29 and the link 15 are adapted to allow a pivoting movement of the front arm part 2 and the rear arm part 3 relative to each other when mounting the trailing arm 1 onto the axle body 10, as is illustrated in Fig. 4. The closing movement, i.e. a pivoting movement around the fulcrum 29 of the axle seating portion 7 with respect to axle seating portion 9 is illustrated in Fig. 4 with an arrow 30. The pivoting movement to a mounted state increases the distance between the hook portions 22 and 25 and induces a strain in the tensioning rods 16 of the link 15 which provides a clamping force to clamp the support surfaces 27 and 28 together.

Thus the axle seating portions 7 and 9 are hinged from the open state to a closed state as is illustrated in Fig. 5, during which the first (front) ends are held together by the tensioning link 15 and such that the first end support surface 27 of the one seating portion 7 rolls over the first end support surface 28 of the other seating portion 9, and second (rear) ends 31 and 32, respectively, of the axle seating portions 7 and 9 respectively are brought towards each other, as indicated by the arrow 30.

In a practical embodiment the tensioning link 15 will be made of steel. While hinging the axle seating portions 7 and 9 to the closed state, the tensioning rods 16 of the tensioning link 15 are tensioned beyond the yield point. Tensioning the tensioning rods 16 beyond the yield point results in plastic deformation in the tensioning rods 16. Beyond the yield point the slope of the strain-stress curve of steel is considerably smaller than in the elastic domain before the yield point. By tensioning the tensioning rods 16 beyond the yield point there can be compensated for tolerances in the trailing arm parts 2, 3 that are to be clamped together while a pretension is maintained which is as constant as possible. The latter results in the desired well defined clamping force at the front end of the axle seating portions 7 and 9.

When the second ends 31 and 32 of the axle seating portions 7 and 9, which in this embodiment correspond to the rear ends, are brought sufficiently close towards each other, they are interconnected by the fastener 18. In the specific embodiment shown in the figures, the fastener 18 comprises a threaded bolt 35 and nut 36. The second (rear) ends 31 and 32 are tightened towards each other by tightening the nut 36 on the bolt 35.

Instead of one bolt as a fastener 18 it is also conceivable to use two or more bolts. It is also conceivable to use a U-bolt to connect the second ends of the axle seating portions.

In Fig. 3 can be seen that the support surface 28 at the first end 34 (front end) of the axle seating portion 9 of the rear arm part 3 is provided with a positioning protrusion 37. The other support surface 27 is provided with a corresponding positioning recess 38. In the assembled state, the protrusion 37 is received in the recess 38, thereby locking the support surfaces 27, 28 at least in the transverse direction of the trailing arm 1.

In the embodiment of Figs 1-5 the trailing arm is a two-piece trailing arm. It is also possible to have a one-piece trailing arm having an axle seating portion for the axle body 10 and a clamping shell engaging the opposite side of the axle body 10. This is for example shown in Fig. 6.

The trailing arm in Fig. 6 has a an eyelet 5 at the front end portion 4, a spring portion 8, an axle seating portion 61 and an air spring mounting portion 6, which are all integrally formed. A clamping shell 62 is positioned opposite the axle seating portion 61 of the trailing arm. The axle seating portion 61 and the clamping shell 62 form in this embodiment the first clamping part and the second clamping part of the axle clamping arrangement 100. In this specific example the clamping shell 62 and the axle seating portion are clamped together by two tensioning links 15 formed as a sort of chain link as was described with reference to Figs. 1-5.

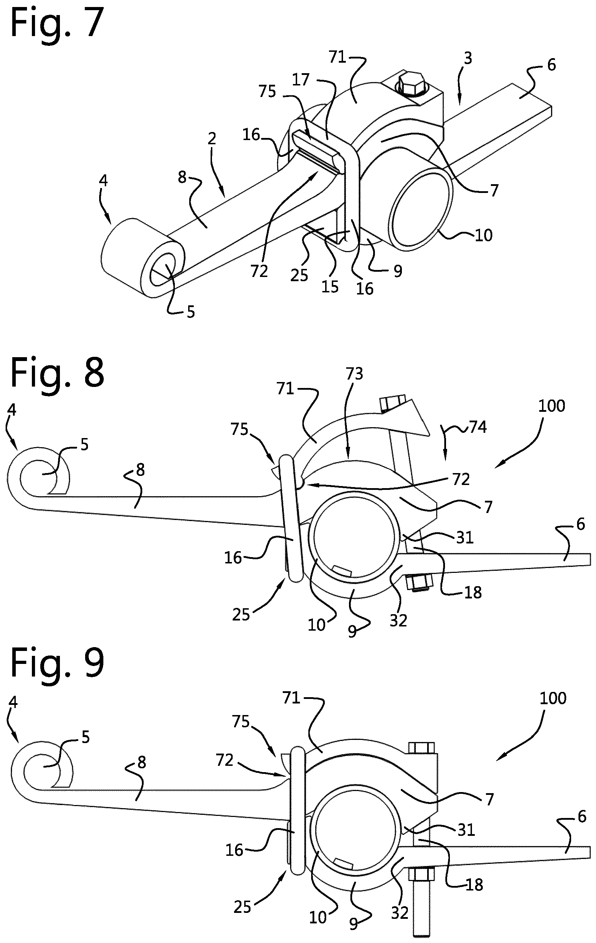

In Figs. 7-9 another embodiment of an axle clamping arrangement 100 is illustrated. In this embodiment the trailing arm is a two-piece trailing arm comprising a front arm part 2 including the front end portion 4 with an eyelet 5, and a rear arm part 3 including the air spring mounting portion 6. The front arm part 2 includes an axle seating portion 7 which engages with one side the axle body. Between the front portion 4 and the axle seating portion 7 of the front arm part 2 a spring portion is 8 is integrally formed. The rear arm part 3 includes an axle seating portion 9. The axle seating portions 7 and 9 being positioned opposite each other and the axle body 10 being clamped between the two axle seating portions 7 and 9.

A strap plate 71 is positioned on a side of the trailing arm facing away from the axle body, in this specific embodiment it is positioned on an upper side 73 of the axle seating portion 7 of the front arm part 2. A fulcrum 72 is defined between the strap plate 71 and the upper side 73 of the axle seating portion 7 that faces away from the axle body 10.

The strap plate 71 is in this example clamped on the upper side of the axle seating portion 7 by a tensioning link 15 which extends from the front end of the strap plate 71 to the front end of the axle seating portion 9 of the rear arm part 3. The tensioning link 15 is similar to the tensioning link 15 described with reference to Figs 1-5 and the same reference numerals will be used for the tensioning rods 16 and the transverse limbs 17. On the front end of the strap plate 71 a hook portion 75 is formed to be engaged by one of the transverse limbs 17 of the tensioning link 15. The axle seating portion 9 of the rear arm part 3 has a hook portion 25 similar to the embodiment of Figs. 1-5.

The fulcrum 72 and the link 15 are adapted to allow a pivoting movement of the strap plate 71 and the front arm part 2 relative to each other when mounting the trailing arm 1 onto the axle body 10, as is illustrated in Fig. 8. The closing movement, i.e. a pivoting movement around the fulcrum 72 of the strap plate 71 with respect to axle seating portion 7 is illustrated in Fig. 8 with an arrow 74. The pivoting movement to a mounted state increases the distance between the hook portions 75 and 25 and induces a strain in the tensioning rods 17 of the link 15 which provides a clamping force to clamp the support surfaces 27 and 28 together.

In the clamping arrangement 100 of this embodiment the first clamping member is constituted by the strap plate 71 and the second clamping member is constituted by the axle seating portion 9 of the rear arm part 3.

The rear end of the axle clamping arrangement 100 in this example of Figs. 7-9 is held together by a threaded fastener 18 in this case bolt 35 and nut 36. The shank of the bolt extends through aligned bores in the strap plate 71, the axle seating portion 7 of the front arm part 2, and the axle seating portion 9 of the rear arm part 3. When the rear ends 31 and 32 of the axle seating portions 7 and 9, and the rear end of the strap plate 71 are brought sufficiently close towards each other, they are interconnected by the fastener 18. In the specific embodiment shown in the figures, the fastener 18 comprises a threaded bolt 35 and nut 36. The rear ends of the strap plate 71 and the axle seating portion 9 are tightened towards each other by tightening the nut 36 on the bolt 35, whereby the rear end 31 of the axle seating portion 7 is also tightened towards the rear end 32 of the axle seating portion 9.

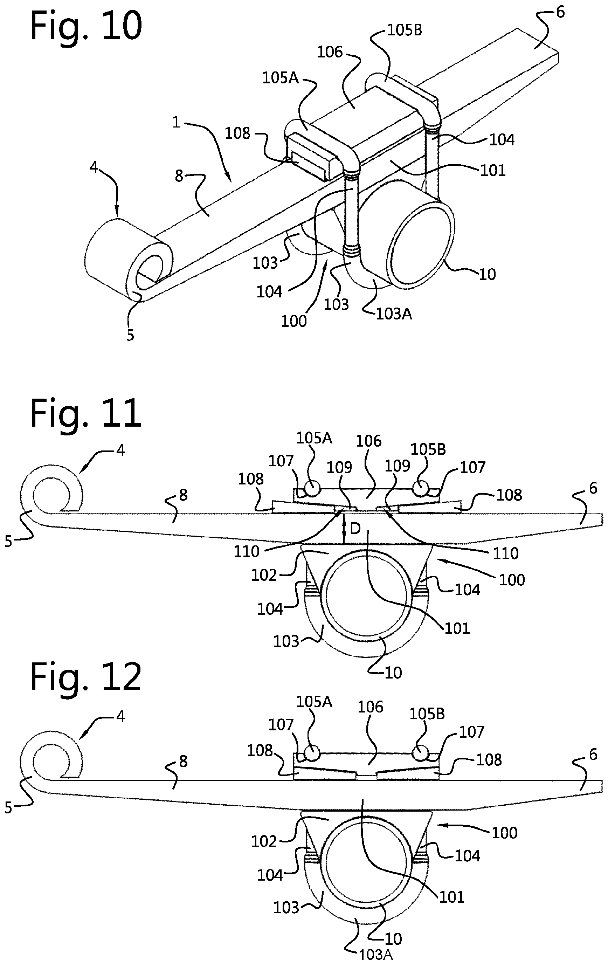

In Figs. 10-12 an example of an embodiment of an axle clamping arrangement 100 is shown in which the tensioning mechanism for the tensioning link or links comprises a wedge mechanism.

In Figs 10-12 a one-piece trailing arm 1 is shown which has an eyelet 5 at the front end portion 4, a spring portion 8 and an air spring mounting portion 6, which are all integrally formed. Directly rearwards of the spring portion 8 a clamping portion 101 is formed. An axle pad 102 is arranged against a lower surface of the clamping portion 101 of the trailing arm. The axle pad 102 forms an axle seat for the axle body 10. The axle body 10 is clamped in the axle seat by a pair of U-shaped brackets 103 which extend around the axle body 10 and with upper portions of the legs 104 of the U-shaped brackets 103 along the lateral sides of the clamping portion 101 of the trailing arm. The U-shaped brackets are interconnected by transverse limbs 105, wherein the front legs of the U-shaped brackets 103 are interconnected by a limb 105A and the rear legs of the U-shaped brackets 103 are interconnected by a limb 105B. The limbs 105 cross over an upper side of the trailing arm. In a possible embodiment, which is shown in Figs. 10-12, the limbs 105 and the U-shaped brackets 103 are monolithically formed.

On an upper side of the clamping portion 101 of the trailing arm a strap plate 106 is arranged. The strap plate 106 has a pair of transversely extending grooves 107 in its upper surface to receive the limbs 105.

When the limbs 105 are accommodated in the corresponding grooves 107 and the bent portion of the U-shaped brackets 103 are engaging the axle body 10, the distance D (see Fig. 11) between the lower surface of the strap plate 107 and the upper surface of the axle pad 102 exceeds the thickness of the clamping portion 101 of the trailing arm 1. Thereby the position of the axle body 10 with respect to the trailing arm 1 in the longitudinal direction of the trailing arm 1 can be determined.

For securing the trailing arm 1 and the axle body 10 with respect to each other the clamping arrangement 100 in this embodiment comprises a pair of wedges 108 and a pair of recesses 109 in the surface of the strap plate 106 that faces the upper surface of the clamping portion 101 of the trailing arm 1. The recesses 109 preferably have an inclined surface 110 to cooperate with the wedge 108. The wedges 108 are respectively introduced in the space defined by the corresponding recess 109 and the upper surface of the clamping portion 101 of the trailing arm. When the wedge 108 is advanced in said space it will force the strap plate 106 away from the upper surface of the clamping portion 101, whereby the legs 104 of the U-shaped brackets 103 are elongated and therefore tensioned.

In this embodiment the first clamping member is thus the strap plate 106, the second clamping member is the bent portion 103A of the U-shaped bracket 103, the tensioning link is formed by the legs 104 and limbs 105A, 105B of the U-shaped bracket 103, wherein the tensioning rods are the legs 104. Furthermore the extension mechanism of the clamping arrangement 100 in this embodiment is formed by the wedge mechanism.

It is to be understood that the above described embodiments of Figs. 1-12 are to be considered merely as non-limiting examples illustrating the scope of the claimed invention.

Many modifications can be made to the examples which are still within the scope of the invention.

Furthermore it must be noted that the ring-like tensioning links 15 shown in the embodiments of Figs. 1-9 can be modified and still remain within the scope the invention.

In the embodiments already shown in Figs 1-9 the links 15 are one-piece articles made of metal as is shown in Fig. 13. This particular embodiment of the link is subjected to elastic and plastic strain all over the circumference of the ring-like link 15 when the extension mechanism is activated.

Another example of a link is shown in Fig. 14. This link 215 is also a ring-like link in one piece made of metal. However, in this link 215 the tensioning rods 216 are thinner than the limbs 217 interconnecting them. This particular embodiment of the link is subjected to elastic strain all over the circumference of the ring-like link 215 when the extension mechanism is activated. However, only the thinner tensioning rods 216 are also subjected to plastic strain. Fig. 15 shows an example of a ring-like link 315 which is made of multiple components. In particular the tensioning rods 316 are made separately and the limbs 317 linking the rods 316 together are made separately and then assembled to form the ring-like link 316 as shown in the figure.

Fig. 16 shows a U-shaped tensioning link 415 which has a transverse limb 417 connecting two tensioning rods 416. The tensioning rods 416 have at their free end portions 418 a male thread. When the tensioning rods are for example passed through bores in a strap plate, or bores in a trailing arm, a dedicated corresponding capped nut can be screwed on the end of the respective tensioning rods. The end of the capped nut then forms an abutment which has a predetermined distance from the transverse limb 417. The tensioning rods 416 are in that state not yet tensioned. An extension mechanism, of which in the Figs. 1-12 several examples have been illustrated is then used to increase the distance between the limb 417 and the abutment of the capped nut, and thus increasing the length of the tensioning rod 416.

Fig. 17 shows a tensioning link 515 which has only one tensioning rod 416. At the ends of the tensioning rod 416 there are provided threaded portions 518. When the tensioning rod 416 is for example passed through a bore in a strap plate, or a bore in a trailing arm, a dedicated corresponding capped nut can be screwed on the respective ends of the tensioning rod. The end of the two capped nuts then form an abutment which have a predetermined mutual distance. The tensioning rod 516 is in that state not yet tensioned. An extension mechanism, of which in the Figs. 1-12 several examples have been illustrated is then used to increase the distance between the capped nuts and thus increasing the length of the tensioning rod 516.

The tensioning rods 16, 216, 316, 416, 516 of the tensioning link 15, 215, 315, 415, 515 are adapted to be tensioned beyond the yield point. Tensioning the tensioning rods 16, 216, 316, 416, 516 beyond the yield point results in plastic deformation in the tensioning rods 16, 216, 316, 416, 516. Beyond the yield point the strain will increase while the tension remains relatively constant, or at least does not increase linearly therewith. By tensioning the tensioning rods 16, 216, 316, 416, 516 beyond the yield point there can be compensated for tolerances in the parts that are to be clamped together while a pretension is maintained which is as constant as possible. The latter results in the desired well defined clamping force at a front end of the axle clamping arrangement 100.

## Claims

1. Axle clamping arrangement (100) adapted to secure an axle body (10) to a trailing arm (1) in an air sprung wheel axle suspension for a vehicle, the axle clamping arrangement (100) comprising:
- a first clamping member (7; 61; 71; 106);
- a second clamping member (9; 62; 103A);
- a tensioning link (15; 215; 315; 415; 515) associated with the first clamping member (7; 71) and the second clamping member (9), the tensioning link (15) comprising at least one tensioning rod (16; 104; 216; 316; 416; 516);
**characterized in that** the axle clamping arrangement furthermore comprises:
- an extension mechanism which is adapted to increase the distance between the first clamping member (7; 71; 106) and the second clamping member (9; 103A) at the location of the tensioning link (15) to cause an extension of the tensioning rod (16; 104; 216; 316; 416; 516) such that the tensioning rod (16; 104; 216; 316; 416; 516) is stressed beyond the yield point, thereby providing the tensioning rod (16; 104; 216; 316; 416; 516) with a pretension for providing the clamping force for the axle clamping arrangement (100) to secure the axle body (10) to the trailing arm (1).

2. Axle clamping arrangement (100) according to claim 1, wherein the extension mechanism includes:
- the tensioning link (15) has a first engagement limb (17; 217; 317) connected to the tensioning rod (16; 216; 316) and engaging the first clamping member (7; 71) at a first engagement surface (23),
- a fulcrum (29; 72), wherein the first clamping member (7; 71) is pivotable about said fulcrum (29; 72) from a pre-mounting state to a mounting state, wherein the pivoting movement to the mounting state results in an increase of the distance between the first engagement surface (23) and the second clamping member (9) at the location of the tensioning link (15) causing said predetermined extension of the tensioning rod (16).

3. Axle clamping arrangement (100) according to claim 2, wherein the tensioning link (15; 215; 315) has a second engagement limb (17; 217; 317) connected to the tensioning rod (16; 216; 316) and engaging the second clamping member (9) at a second engagement surface (26).

4. Axle clamping arrangement (100) according to claim 3, wherein the tensioning link (15; 215) is a ring-like link comprising two tensioning rods (16; 216) and the first and second engagement limbs (17; 217) interconnecting the two tensioning rods (16; 216).

5. Axle clamping arrangement (100) according to claim 4, wherein the first and second engagement surfaces (23, 26) are defined by respective first and second hook portions (22, 25) formed on the respective first and second clamping members (7, 9), wherein the respective first and second engagement limbs (17) are adapted to be hooked behind the respective first and second hook portions (22, 25).

6. Axle clamping arrangement (100) according to claim 1, wherein the extension mechanism includes a wedge structure (106, 108) located in the clamping arrangement (100) somewhere between the first clamping member (106) and the second clamping member (103A) such that, when the wedge structure is activated, the distance between the first clamping member (106) and the second clamping member (103A) is increased at the location of the tensioning link causing said predetermined extension of the tensioning rod (104).

7. Axle clamping arrangement according to any of the preceding claims, wherein the extension mechanism comprises a stop, which defines a predetermined end position of the extension mechanism.

8. Air sprung wheel axle suspension for a vehicle such as a truck, trailer or semi-trailer, said suspension including an axle body (10) extending substantially in the transverse direction of the vehicle, and furthermore including on each side of the vehicle a bearing bracket (11) associated with a vehicle chassis (12), an air spring (14) secured to the vehicle chassis, and a trailing arm (1) extending substantially in the longitudinal direction of the vehicle, pivotally connected with its front end portion (4) to the bearing bracket (13) and mounted with an air spring mounting portion (6) thereof to the air spring (14), wherein the trailing arm (1) is secured to the axle body (10) by an axle clamping arrangement (100) according to any of the preceding claims.

9. Air sprung wheel axle suspension according to claim 8 as far as it depends on claim 2, wherein the trailing arm (1) is a two-piece trailing arm comprising a front arm part (2) including the front end portion (4) and a rear arm part (3) including the air spring mounting portion (6), wherein the first clamping member is constituted by an axle seating portion (7) formed on the front arm part (2) and the second clamping member is constituted by an axle seating portion (9) formed on the rear arm part (3), the axle seating portions (7, 9) being positioned opposite each other and the axle body (10) being clamped between the two axle seating portions (7, 9) by at least the tensioning link (15), and wherein the fulcrum (29) is defined by two opposite support surfaces (27, 28) formed on the respective axle seating portions (7, 9).

10. Air sprung wheel axle suspension according to claim 9, wherein, seen in the longitudinal direction of the trailing arm (1), one end (33, 34) of the axle seating portions (7, 9) is tightened together by the tensioning link (15) and the other end of the axle seating portions (7, 9) is tightened together by a threaded fastener (18), such as a bolt or a U-bolt, or wherein, seen in the longitudinal direction of the trailing arm (1), both ends of the axle seating portions (7, 9) are tightened together by tensioning links (15).

11. Air sprung wheel axle suspension according to claim 8, wherein the trailing arm includes or is provided with an axle seating portion (7) which engages with one side the axle body (10), and wherein the first clamping member is constituted by a strap plate (71) which is positioned on a side of the trailing arm facing away from the axle body (10), and wherein the second clamping member (9) is positioned on an opposite side of the axle body (10).

12. Air sprung wheel axle suspension according to claim 11, wherein the trailing arm is a two-piece trailing arm comprising a front arm part (2) including the front end portion (4), and a rear arm part (3) including the air spring mounting portion (6), wherein the second clamping member is constituted by an axle seating portion (9) formed on the rear arm part (3), the axle seating portions (7, 9) being positioned opposite each other and the axle body (10) being clamped between the two axle seating portions (7, 9), and wherein the tensioning link (15) extends between the strap plate (71) and the axle seating portion (9) of the rear arm part (3), and wherein the fulcrum (72) is defined between the strap plate (71) and the side of the axle seating portion (7) of the front arm part (2) facing away from the axle body (10).

13. Air sprung wheel axle suspension according to claim 12, wherein, seen in the longitudinal direction of the trailing arm, one end of the axle seating portions (7, 9) is tightened together by the tensioning link (15) and the other end of the axle seating portions (7, 9) is tightened together by a threaded fastener (18), such as a bolt or a U-bolt.

14. Air sprung wheel axle suspension according to claim 11, wherein the second clamping member is a clamping shell and wherein the tensioning link extends between the strap plate and the clamping shell, and wherein the fulcrum is defined between the strap plate and the side of the axle seating portion of the trailing arm facing away from the axle body, wherein preferably, seen in the longitudinal direction of the trailing arm, one end of the axle seating portion and the clamping shell is tightened together by the tensioning link and the other end of the axle seating portion and the clamping shell is tightened together by a threaded fastener, such as a bolt or a U-bolt.

15. Air sprung wheel axle suspension according to claim 11 as far as it depends on claim 6, wherein the wedge structure is formed between the strap plate (106) and the trailing arm and comprises at least one recess (109) in the strap plate (106) and at least one wedge (108) adapted to engage a wedge engagement surface of the trailing arm (1) and to be inserted in said recess (109) so as to force the strap plate (106) away from the trailing arm (1).

## Patentansprüche

1. Achsklemmeinrichtung (100), die dazu geeignet ist, einen Achskörper (10) an einem Längslenker (1) in einer luftgefederten Radachsaufhängung für ein Fahrzeug zu befestigen, wobei die Achsklemmeinrichtung (100) Folgendes umfasst:
- ein erstes Klemmelement (7; 61; 71;106);
- ein zweites Klemmelement (9; 62; 103A);
- ein Spannglied (15; 215; 315; 415; 515), das dem ersten Klemmelement (7;71) und dem zweiten Klemmelement (9) zugeordnet ist, wobei das Spannglied (15) mindestens eine Spannstange (16; 104; 216; 316; 416; 516) umfasst;
**dadurch gekennzeichnet, dass** die Achsklemmeinrichtung außerdem Folgendes umfasst:
- einen Verlängerungsmechanismus, der geeignet ist, den Abstand zwischen dem ersten Klemmelement (7; 71; 106) und dem zweiten Klemmelement (9; 103A) an der Stelle des Spannglieds (15) zu vergrößern, um eine Verlängerung der Spannstange (16; 104;216; 316; 416, 516) zu bewirken, so dass die Spannstange (16; 104; 216; 316; 416; 516) über die Streckgrenze hinaus belastet wird, wodurch die Spannstange (16; 104; 216; 316; 416; 516) mit einer Vorspannung versehen wird, um die Klemmkraft für die Achsklemmeinrichtung (100) bereitzustellen, um den Achskörper (10) an dem Längslenker (1) zu befestigen.

2. Achsklemmeinrichtung (100) nach Anspruch 1, wobei der Verlängerungsmechanismus Folgendes umfasst:
- das Spannglied (15) weist einen ersten Eingriffsschenkel (17; 217; 317) auf, der mit der Spannstange (16; 216; 316) verbunden ist und am ersten Klemmelement (7; 71) an einer ersten Eingriffsfläche (23) angreift,
- einen Drehpunkt (29; 72), wobei das erste Klemmelement (7; 71) um den Drehpunkt (29; 72) von einem Vormontagezustand in einen Montagezustand schwenkbar ist, wobei die Schwenkbewegung in den Montagezustand zu einer Vergrößerung des Abstandes zwischen der ersten Eingriffsfläche (23) und dem zweiten Klemmelement (9) an der Stelle des Spanngliedes (15) führt, was die vorbestimmte Verlängerung der Spannstange (16) bewirkt.

3. Achsklemmeinrichtung (100) nach Anspruch 2, wobei das Spannglied (15; 215; 315) einen zweiten Eingriffsschenkel (17; 217; 317) aufweist, der mit der Spannstange (16; 216; 316) verbunden ist und an einer zweiten Eingriffsfläche (26) an dem zweiten Klemmkörper (9) angreift.

4. Achsklemmeinrichtung (100) nach Anspruch 3, wobei das Spannglied (15; 215) ein ringförmiges Glied ist, das zwei Spannstangen (16; 216) und die ersten und zweiten Eingriffsschenkel (17; 217) umfasst, die die beiden Spannstangen (16; 216) miteinander verbinden.

5. Achsklemmeinrichtung (100) nach Anspruch 4, wobei die ersten und zweiten Eingriffsflächen (23, 26) durch entsprechende erste und zweite Hakenabschnitte (22, 25) definiert sind, die an den entsprechenden ersten und zweiten Klemmelementen (7, 9) ausgebildet sind, wobei die entsprechenden ersten und zweiten Eingriffsschenkel (17) so angepasst sind, dass sie hinter den entsprechenden ersten und zweiten Hakenabschnitten (22, 25) eingehakt werden können.

6. Achsklemmeinrichtung (100) nach Anspruch 1, wobei der Verlängerungsmechanismus eine Keilstruktur (106, 108) umfasst, die in der Klemmanordnung (100) irgendwo zwischen dem ersten Klemmelement (106) und dem zweiten Klemmelement (103A) angeordnet ist, so dass, wenn die Keilstruktur aktiviert wird, der Abstand zwischen dem ersten Klemmelement (106) und dem zweiten Klemmelement (103A) an der Stelle des Spannglieds vergrößert wird, was die genannte vorbestimmte Verlängerung der Spannstange (104) bewirkt.

7. Achsklemmeinrichtung nach einem der vorhergehenden Ansprüche, wobei der Verlängerungsmechanismus einen Anschlag aufweist, der eine vorgegebene Endposition der Achsklemmeinrichtung definiert.

8. Luftgefederte Radachsaufhängung für ein Fahrzeug, wie z.B. einen Lastkraftwagen, Anhänger oder Sattelauflieger, wobei die Aufhängung einen sich im Wesentlichen in Querrichtung des Fahrzeugs erstreckenden Achskörper (10) und außerdem auf jeder Seite des Fahrzeugs einen einem Fahrzeugchassis (12) zugeordneten Lagerbock (11) aufweist, sowie eine am Fahrzeugchassis befestigten Luftfeder (14) und einen sich im Wesentlichen in Fahrzeuglängsrichtung erstreckenden Längslenker (1), der mit seinem vorderen Endabschnitt (4) schwenkbar mit dem Lagerbock (13) verbunden und mit einem Luftfederbefestigungsabschnitt (6) desselben an der Luftfeder (14) befestigt ist, wobei der Längslenker (1) durch eine Achsklemmeinrichtung (100) nach einem der vorhergehenden Ansprüche am Achskörper (10) befestigt ist.

9. Luftgefederte Radachsaufhängung nach Anspruch 8, soweit er von Anspruch 2 abhängt, wobei der Längslenker (1) ein zweiteiliger Längslenker ist, der einen vorderen Lenkerteil (2) mit dem vorderen Endabschnitt (4) und einen hinteren Lenkerteil (3) mit dem Luftfederbefestigungsabschnitt (6) umfasst, wobei das erste Klemmelement durch einen am vorderen Lenkerteil (2) ausgebildeten Achssitzabschnitt (7) und das zweite Klemmelement durch einen am hinteren Lenkerteil (3) ausgebildeten Achssitzabschnitt (9) gebildet sind, wobei die Achsensitzabschnitte (7, 9) gegenüberliegend angeordnet sind und der Achskörper (10) zwischen den beiden Achssitzabschnitten (7, 9) durch zumindest das Spannglied (15) eingeklemmt ist, und wobei der Drehpunkt (29) durch zwei gegenüberliegende Stützflächen (27, 28) definiert ist, die an den jeweiligen Achsensitzabschnitten (7, 9) ausgebildet sind.

10. Luftgefederte Radachsaufhängung nach Anspruch 9, wobei in Längsrichtung des Längslenkers (1) gesehen das eine Ende (33, 34) der Achsensitzabschnitte (7, 9) durch das Spannglied (15) und das andere Ende der Achsensitzabschnitte (7; 9) durch einen Gewindebefestigungselement (18), wie z.B. einen Bolzen oder einen Ü-Bügel, gespannt ist, oder wobei in Längsrichtung des Längslenkers (1) gesehen beide Enden der Achsensitzabschnitte (7, 9) durch Spannglieder (15) gespannt sind.

11. Luftgefederte Radachsaufhängung nach Anspruch 8, wobei der Längslenker einen Achssitzabschnitt (7) aufweist oder mit einem solchen versehen ist, der an einer Seite des Achskörpers (10) angreift, und wobei das erste Klemmelement durch eine Gegenplatte (71) gebildet ist, die auf einer dem Achskörper (10) abgewandten Seite des Längslenkers angeordnet ist, und wobei das zweite Klemmelement (9) auf einer gegenüberliegenden Seite des Achskörpers (10) angeordnet ist.

12. Luftgefederte Radachsaufhängung nach Anspruch 11, wobei der Längslenker ein zweiteiliger Längslenker ist, der einen vorderen Lenkerteil (2), der den vorderen Endabschnitt (4) umfasst, und einen hinteren Lenkerteil (3) mit dem Luftfederbefestigungsabschnitt (6) umfasst, wobei das zweite Klemmelement durch einen an dem hinteren Lenkerteil (3) ausgebildeten Achsensitzabschnitt (9) gebildet ist, wobei die Achsensitzabschnitte (7, 9) einander gegenüberliegend angeordnet sind und der Achskörper (10) zwischen den beiden Achsensitzabschnitten (7, 9) eingeklemmt ist, und wobei sich das Spannglied (15) zwischen der Gegenplatte (71) und dem Achsensitzabschnitt (9) des hinteren Lenkerteils (3) erstreckt, und wobei der Drehpunkt (72) zwischen der Gegenplatte (71) und der vom Achskörper (10) abgewandten Seite des Achsensitzteils (7) des vorderen Lenkerteils (2) definiert ist.

13. Luftgefederte Radachsaufhängung nach Anspruch 12, **dadurch gekennzeichnet, dass** in Längsrichtung des Längslenkers gesehen ein Ende der Achsensitzabschnitte (7, 9) durch das Spannglied (15) gespannt ist, und das andere Ende der Achsensitzabschnitte (7, 9) durch ein Gewindebefestigungselement (18), z. B. einen Bolzen oder einen U-Bügel, gespannt ist.

14. Luftgefederte Radachsaufhängung nach Anspruch 11, wobei das zweite Klemmelement eine Spannschale ist und sich das Spannglied zwischen der Gegenplatte und dem zweiten Klemmelement erstreckt, wobei der Drehpunkt zwischen der Gegenplatte und der vom Achskörper abgewandten Seite des Achssitzabschnitts des Längslenkers definiert ist, wobei, vorzugsweise, in Längsrichtung des Längslenkers gesehen, ein Ende des Achssitzabschnitts und die Klemmschale durch das Spannglied gespannt sind und das andere Ende des Achssitzabschnitts und die Klemmschale durch ein Gewindebefestigungsmittel, wie z. B. einen Bolzen oder einen Bügel, gespannt sind.

15. Luftgefederte Radachsaufhängung nach Anspruch 11, soweit sie von Anspruch 6 abhängt, wobei die Keilstruktur zwischen der Gegenplatte (106) und dem Längslenker ausgebildet ist und mindestens eine Aussparung (109) in der Gegenplatte (106) und mindestens einen Keil (108) umfasst, der so beschaffen ist, dass er in eine Keileingriffsfläche des Längslenkers (1) eingreift und in die Aussparung (109) eingesetzt werden kann, um die Gegenplatte (106) vom Längslenker (1) weg zu drücken.

## Revendications

1. Dispositif de serrage d'essieu (100) adapté pour fixer un corps d'essieu (10) à un bras oscillant (1) dans une suspension pneumatique d'essieu de roue pour un véhicule, le dispositif de serrage d'essieu (100) comprenant :
- un premier élément de serrage (7 ; 61 ; 71 ; 106) ;
- un deuxième élément de serrage (9 ; 62 ; 103A) ;
- un lien de tension (15 ; 215 ; 315 ; 415 ; 515) associé au premier organe de serrage (7 ; 71) et au deuxième organe de serrage (9), le lien de tension (15) comprenant au moins une tige de tension (16; 104; 216; 316 ; 416 ; 516) ;
**caractérisé en ce que** l'agencement de serrage d'essieu comprend en outre :
- un mécanisme d'extension qui est adapté pour augmenter la distance entre le premier élément de serrage (7 ; 71 ; 106) et le deuxième élément de serrage (9 ; 103A) à l'emplacement du lien de tension (15) pour provoquer une extension du tendeur tige (16 ; 104 ; 216 ; 316 ; 416 ; 516) de sorte que la tige de tension (16 ; 104 ; 216 ; 316 ; 416 ; 516) est sollicitée au-delà de la limite d'élasticité, conférant ainsi à la tige de tension (16 ; 104 ; 216 ; 316 ; 416 ; 516) une précontrainte pour fournir la force de serrage pour le dispositif de serrage d'essieu (100) pour fixer le corps d'essieu (10) au bras oscillant (1).

2. Dispositif de serrage d'essieu (100) selon la revendication 1, dans lequel le mécanisme d'extension comprend :
- le lien de tension (15) a une première branche d'engagement (17 ; 217 ; 317) reliée à la tige de tension (16 ; 216 ; 316) et engageant le premier élément de serrage (7 ; 71) au niveau d'une première surface d'engagement (23),
- un point d'appui (29 ; 72), dans lequel le premier élément de serrage (7 ; 71) peut pivoter autour dudit point d'appui (29 ; 72) d'un état de pré-montage à un état de montage, dans lequel le mouvement de pivotement vers l'état de montage entraîne une augmentation de la distance entre la première surface d'engagement (23) et le deuxième élément de serrage (9) à l'emplacement du lien de tension (15) provoquant ladite extension prédéterminée de la tige de tension (16).

3. Dispositif de serrage d'essieu (100) selon la revendication 2, dans lequel le lien de tension (15 ; 215 ; 315) a une deuxième branche d'engagement (17 ; 217 ; 317) reliée à la tige de tension (16 ; 216 ; 316) et s'engageant avec le second élément de serrage (9) au niveau d'une seconde surface d'engagement (26).

4. Dispositif de serrage d'essieu (100) selon la revendication 3, dans lequel le lien de tension (15 ; 215) est une liaison en forme d'anneau comprenant deux tiges de tension (16 ; 216) et les première et seconde branches d'engagement (17 ; 217) interconnectant les deux tiges de tension (16 ; 216).

5. Dispositif de serrage d'essieu (100) selon la revendication 4, dans lequel les première et deuxième surfaces d'engagement (23, 26) sont définies par des première et deuxième parties de crochet (22, 25) respectives formées sur les premier et deuxième éléments de serrage (7, 9) respectifs, dans lequel les première et seconde branches d'engagement (17) respectives sont adaptées pour être accrochées derrière les première et seconde parties de crochet (22, 25) respectives.

6. Dispositif de serrage d'essieu (100) selon la revendication 1, dans lequel le mécanisme d'extension comprend une structure de coin (106, 108) située dans le dispositif de serrage (100) quelque part entre le premier élément de serrage (106) et le deuxième élément de serrage (103A) de sorte que, lorsque la structure en coin est activée, la distance entre le premier élément de serrage (106) et le deuxième élément de serrage (103A) est augmentée à l'emplacement du lien de tension provoquant ladite extension prédéterminée de la tige de tension (104).

7. Dispositif de serrage d'essieu selon l'une quelconque des revendications précédentes, dans lequel le mécanisme d'extension comprend une butée, qui définit une position finale prédéterminée du mécanisme d'extension.

8. Suspension pneumatique d'essieu de roue pour un véhicule tel qu'un camion, une remorque ou une semi-remorque, ladite suspension comprenant un corps d'essieu (10) s'étendant sensiblement dans la direction transversale du véhicule, et comprenant en outre de chaque côté du véhicule un support de palier (11) associé à un châssis de véhicule (12), un ressort pneumatique (14) fixé au châssis du véhicule, et un bras oscillant (1) s'étendant sensiblement dans la direction longitudinale du véhicule, relié de manière pivotante avec sa partie d'extrémité avant (4) et au support de palier (13) et monté avec une partie de montage (6) de ressort pneumatique ici le ressort pneumatique (14), dans lequel le bras oscillant (1) est fixé au corps d'essieu (10) par un dispositif de serrage d'essieu (100) selon l'une quelconque des revendications précédentes.

9. Suspension pneumatique d'essieu de roue selon la revendication 8 dans la mesure où elle dépend de la revendication 2, dans laquelle le bras oscillant (1) est un bras oscillant en deux parties comprenant une partie de bras avant (2) comprenant la partie d'extrémité avant (4) et une partie de bras arrière (3) comprenant la partie de montage (6) de ressort pneumatique, dans lequel le premier élément de serrage est constitué par une portion d'assise d'essieu (7) formée sur la partie de bras avant (2) et le deuxième élément de serrage est constitué par une portion d'assise d'essieu (9) formée sur la partie de bras arrière (3), les portions d'appui d'essieu (7, 9) étant positionnées face à face et le corps d'essieu (10) étant serré entre les deux portions d'appui d'essieu (7, 9) par au moins le lien de tension (15), et dans lequel le point d'appui (29 ) est défini par deux surfaces de support opposées (27, 28) formées sur les portions de siège d'essieu respectives (7, 9).

10. Suspension pneumatique d'essieu de roue selon la revendication 9, dans laquelle, vue dans la direction longitudinale du bras oscillant (1), une extrémité (33, 34) des portions de siège d'essieu (7, 9) est serrée ensemble par le lien de tension (15) et l'autre extrémité des portions d'assise d'essieu (7, 9) sont serrées ensemble par une fixation filetée (18), telle qu'un boulon ou un boulon en U, ou dans laquelle, vue dans la direction longitudinale du bras oscillant (1), les deux extrémités des portions de siège d'essieu (7, 9) sont serrées ensemble par des liens de tension (15).

11. Suspension pneumatique d'essieu de roue selon la revendication 8, dans laquelle le bras oscillant comprend ou est pourvu d'une portion d'assise d'essieu (7) qui s'engage avec un côté du corps d'essieu (10), et dans laquelle le premier élément de serrage est constitué par un plaque de sangle (71) qui est positionnée sur un côté du bras oscillant opposé au corps d'essieu (10), et dans laquelle le second élément de serrage (9) est positionné sur un côté opposé du corps d'essieu (10).

12. Suspension pneumatique d'essieu de roue selon la revendication 11, dans laquelle le bras oscillant est un bras oscillant en deux parties comprenant une partie de bras avant (2) comprenant la partie d'extrémité avant (4), et une partie de bras arrière (3) comprenant la partie de montage (6) de ressort pneumatique, dans laquelle le deuxième élément de serrage est constitué par une portion de siège d'essieu (9) formée sur la partie de bras arrière (3), les portions de siège d'essieu (7, 9) étant positionnées face à face et l'essieu corps (10) étant serré entre les deux portions de siège d'essieu (7, 9), et dans lequel le lien de tension (15) s'étend entre la plaque de sangle (71) et la portion de siège d'essieu (9) de la partie de bras arrière (3), et dans lequel le point d'appui (72) est défini entre la plaque de sangle (71) et le côté de la partie d'assise d'essieu (7) de la partie de bras avant (2) tourné à l'opposé du corps d'essieu (10).

13. Suspension pneumatique d'essieu de roue selon la revendication 12, dans laquelle, vue dans la direction longitudinale du bras tiré, une extrémité des portions de siège d'essieu (7, 9) est serrée ensemble par le lien de tension (15) et l'autre extrémité des portions de siège d'essieu (7, 9) sont serrées ensemble par une fixation filetée (18), telle qu'un boulon ou un boulon en U.

14. Suspension pneumatique d'essieu de roue selon la revendication 11, dans laquelle le deuxième élément de serrage est une coquille de serrage et dans laquelle le lien de tension s'étend entre la plaque de sangle et la coquille de serrage, et dans lequel le point d'appui est défini entre la plaque de sangle et le côté de la portion de siège d'essieu du bras oscillant étant tournée à l'opposé du corps d'essieu, dans lequel de préférence, vu dans la direction longitudinale du bras oscillant, une extrémité de la portion de siège d'essieu et la coquille de serrage sont serrées ensemble par le lien de tension et l'autre extrémité de la portion de siège d'essieu et la coquille de serrage sont serrées ensemble par une fixation filetée, telle qu'un boulon ou un boulon en U.

15. Suspension pneumatique d'essieu de roue selon la revendication 11 dans la mesure où elle dépend de la revendication 6, dans laquelle la structure en coin est formée entre la plaque de sangle (106) et le bras oscillant et comprend au moins un évidement (109) dans la plaque de sangle (106) et au moins une cale (108) adaptée pour s'engager dans une surface d'engagement de cale du bras oscillant (1) et pour être insérée dans ledit évidement (109) de manière à forcer la plaque de sangle (106) à s'éloigner du bras oscillant (1).
